# EUROPEAN PATENT APPLICATION

(11) **EP 4 385 612 A1**
(43) Date of publication of application: **19.06.2024**
(21) Application number: 22856127.0
(22) Date of filing: 05.08.2022
(51) Int. Cl.: B01F 23/232, B01F 23/23, B01F 25/422, B01F 25/432, B01F 25/421, B01F 25/434, B01F 25/431, B01F 25/452, B01F 23/2373

(54) **FINE BUBBLE GENERATION UNIT**

(30) Priority: 09.08.2021 KR 20210104831
(71) Applicant: Pluswell Co., Ltd., Incheon 21638 (KR)
(72) Inventor: LEE, Ae-Jung, Incheon 21523 (KR); BAE, Heay-Jin, Incheon 21523 (KR)
(74) Representative: Petraz, Gilberto Luigi
(86) International application number: PCT/KR2022/011716
(87) International publication number: WO 2023/018128

(57) **Abstract**

The present disclosure relates to a fine bubble generation unit. More particularly, the present disclosure relates to a fine bubble generation unit, which is configured to enlarge the area of friction or collision of a fluid flowing inside a container or cause the fluid, while passing through the inside space of the container, to flow at different velocities in neighboring sections, so as to significantly improve, by a simple configuration, the generation capability and the sterilization power of fine bubbles having the micrometer or nanometer size.

## Description

### Technical Field

The present disclosure relates to a fine bubble generation unit. More particularly, the present disclosure relates to a fine bubble generation unit, which is configured to enlarge the area of friction or collision of a fluid flowing inside a container or cause the fluid, while passing through the inside space of the container, to flow at different velocities in neighboring sections, so as to significantly improve, by a simple configuration, the generation capability and the sterilization power of fine bubbles having the micrometer or nanometer size.

### Background Art

In general, fine bubbles mean microscopic air bubbles in the unit of micrometers or nanometers, which are generated as gas is distributed in liquid.

The fine bubbles are known to serve to play an efficient role in supplying dissolved oxygen to promote growth, and to improve the sterilization effect and antioxidant property and increase pH by using a large amount of high-temperature energy and negative ions that are generated in dissipation of the fine bubbles.

In addition, the fine bubbles have excellent cleansing effect and have excellent skin moisturizing effect, thereby helping skin regeneration, blood circulation, and prevent hair loss, and may be used for rupture of cell membrane. Recently, research on fine bubbles are actively being carried out in the medical field as well as the environmental field, beauty field, food field, etc., and a demand thereof is also increasing.

As conventional fine bubble generating methods, there are the pressurized liquefaction method using the gas supersaturation condition by high pressure, the swivel shear method using energy when a liquid is vortexed and the vortex collapses, and the pressurized swivel shear method using the pressurized liquefaction method and the swivel shear method simultaneously. Since a separate means such as a pressure generating device or a propeller should be additionally installed to generate the fine bubbles as described above, a large of the configuration is complex and the costs for installation and maintenance are required, and limitation in an installation place is caused.

In order to solve the above problems, recently, devices for generating fine bubbles with simpler configuration have been developed, and as an example, Korean Patent No. 10-2100074 discloses the flow channel member for micro/nano bubbles.

The related art is characterized in that a body is a single tube that is bendable and inside the flow channel one or more partition walls are sequentially formed into an integrated body in a flowing direction to partition the space of the flow channel into multiple spaces, so that a boundary layer of a fluid and the area of friction of the fluid is enlarged so as to increase generation of fine bubbles.

However, fine bubbles are mainly generated by collision or friction of a fluid during fluid flow, and the related art has a disadvantage in that one or more partition walls formed therein to increase the boundary layer and the friction area of the fluid are formed in only a transverse direction same as an outlet direction, i. e., a flowing direction of the fluid, thereby causing a flowing distance of the fluid to be formed short, and causing the effect of increasing the friction area to be relatively less.

Furthermore, a fluid inside the flow channel member for micro/nano bubbles, which corresponds to the related art, flows along the single tube type flow channel under the same condition throughout, i.e., in a state in which the flow channel, a sectional area of the flow channel, flow velocity, porous ratio, etc. are same throughout. Since there is no means for allowing fluids to collide with each other in a front portion of the fluid flow direction, occurrence of turbulence of the fluid is less, and most fluids are laminar flows, and the capability of generating fine bubbles per unit volume is also insufficient, and the sterilization power is also limited. There is a disadvantage in that the size of the fine bubble generation device must be increased in order to solve this problem.

Furthermore, one or more partition walls provided therein in order to enlarge the boundary layer and the friction area of the fluid is integrally fixed to the inside portion of the single tube, so when foreign materials or rust mixed in the fluid adheres to the inside partition wall of the long single tube or the inside portion of the fine bubble generation device is contaminated, removal work is very difficult or impossible.

### Disclosure

### Technical Problem

The present disclosure has been made keeping mind the above problems occurring in the related art, and an objective of the present disclosure is to provide a fine bubble generation unit capable of increasing the length of a flow path formed for each unit volume inside a container by filling or stacking a standardized filler that allows the flow path to be open longitudinally or transversely, inside the container, and capable of enlarging the area of friction or collision of a fluid to improve the capability of generating fine bubbles having the micrometer or nanometer size.

Another objective of the present disclosure is to provide a fine bubble generation unit capable of maximizing the generating amount of fine bubbles and minimizing the size of each bubble by crossing flow paths between neighboring standardized fillers to increase the number of collision of a fluid flowing inside a container.

A further objective of the present disclosure is to provide a fine bubble generation unit capable of repeatedly performing generation, dissipation, and generation of fine bubbles inside a container by blocking a flow path formed in the container for a constant section, and configuring a flow path, a sectional area of the flow path, a flow velocity, a porous ratio, etc. differently between neighboring blocks.

A yet objective of the present disclosure is to provide a fine bubble generation unit capable of facilitating the quality management such as the generating amount and the size of a generated fine bubble by filling or stacking a standardized filler constant inside a container, and of easily performing cleaning or replacement by separating a filler when pollution in the container occurs.

### Technical Solution

In order to achieve the above objectives, according to one aspect of the present disclosure, there is provided a fine bubble generation unit.

The fine bubble generation unit may include: a container into which a fluid may be injected and discharged, a plurality of fillers filled or stacked inside the container, including a flow path through which the fluid may flow, the flow path being formed therein or between the plurality of fillers and an inside wall of the container, and a stopper provided inside the container or ends at opposite sides of the container to prevent the plurality of fillers from moving and being removed, wherein fine bubbles may be configured to be generated in a process in which the fluid may pass through an inside portion of the container, and a sectional area of a filler installed at an outlet of the container, through which the fluid may be discharged, may be formed larger than a sectional area of a filler installed at an inlet of the container, thereby enlarging a velocity of the fluid and increasing an area of friction and collision between the fluid and the fillers.

Furthermore, according to the present disclosure, a fine bubble generation unit may include: a container into which a fluid may be injected and discharged, a plurality of fillers filled or stacked inside the container and including a flow path, through which a fluid flows, formed inside, and a stopper provided inside the container or ends at opposite sides of the container to prevent the plurality of fillers from moving and being removed, wherein fine bubbles may be configured to be generated in a process in which the fluid may pass through an inside portion of the container, and a sectional area of a flow path formed in a filler installed at an inlet of the container, through which the fluid may be injected, may be formed larger than a flow path formed in a filler installed at an outlet of the container, through which the fluid may be discharged, to reduce a size of a fine bubble generated in a process in which the fluid may pass through the fillers, thereby minimizing a size of a finally generated fine bubble.

The plurality of fillers may be formed in a coupling module of a block structure in which the plurality of fillers may be connected to each other in series or parallel, and one or more coupling modules may be filled or stacked inside the container.

Each of the plurality of fillers may have a sphere shape in which one or more protrusion portions or one or more depressed groove portions may be formed on a circumferential surface thereof.

Each of the plurality of fillers may have a hollow tube shape having a rib longitudinally formed on an inside wall or an outside wall thereof.

A through hole may be formed on a lateral wall of each of the fillers for forming the flow path.

Each of the plurality of fillers may be formed of a flexible material, and be formed in a sheet shape or a shape in which two or more sheets may be coupled to each other so that the plurality of fillers vibrates by pressure of the fluid flowing inside the container.

Each of the plurality of fillers may be installed in a direction crossing a flowing direction of the fluid, include a through hole to form the flow path, and have a plate shape on which a gap maintaining part may be formed to protrude, on one side portion or opposite side portions to maintain a gap from a neighboring filler.

Each of the plurality of fillers may be installed such that an arrangement of the flow path thereof or a sectional area of the flow path thereof may be different from a neighboring filler.

The coupling module may be installed such that an arrangement of the flow path thereof or a sectional area of the flow path thereof may be different from a neighboring coupling module.

An uneven ( 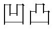 ) structure may be formed between an inside wall of the container and an outside wall of each of the fillers to restrict movement or rotation of each of the fillers inside the container.

### Advantageous Effects

According to the present disclosure, by the relatively simple configuration, the generation ratio of fine bubbles for each unit volume is improved, and the size of each generated fine bubble is minimized, and generation, dissipation, and generation of fine bubbles are repeatedly performed so as to improve the sterilization effect and antioxidant property in dissipation of the fine bubbles, so that there is the excellent effect that the present disclosure can be efficiently applied to all fields, such as agriculture, environment, medical, beauty fields, etc., using fine bubbles.

Furthermore, according to the present disclosure, since a downsized unit having a small volume can generate fine bubbles having the micrometer or nanometer size, the costs for installation and maintenance can be reduced and usage thereof is possible without restriction of time, place, and use, and since the standardized fillers are filled or stacked constantly, the fine bubble generation unit with constant quality can be manufactured, and since separation and cleaning of the container and the filler are easily performed by the simple configuration, maintenance thereof is easily performed and the durability thereof is excellent.

### Description of Drawings

FIG. 1 is an exploded-perspective view showing an embodiment of a fine bubble generation unit according to the present disclosure.
FIGS. 2A to 2F are perspective views showing fillers according to various embodiments of the present disclosure shown in FIG. 1.
FIGS. 3A and 3B are views showing the spherical filler in detail among the fillers shown in FIG. 2.
FIGS. 4A to 4C are views showing the plate type filler in detail among the fillers shown in FIG. 2.
FIGS. 5A and 5B are views showing an embodiment of the plate type filler installed inside a container.
FIG. 6 is a sectional view showing an inside state of the container in which the filler of the fine bubble generation unit according to the present disclosure is installed.
FIGS. 7A to 7C are views showing various embodiments of a stopper of the present disclosure shown in FIG. 1.
FIG. 8 is a perspective view showing a plate type filler according to another embodiment among the fillers shown in FIG. 2.
FIGS. 9A and 9B to FIGS. 13A and 13B are views showing comparison of sectional shapes of fillers installed inside an inlet and an outlet of the container.
FIGS. 14A to 14C are perspective views showing embodiments of the fillers configured in a coupling module of a block structure in the present disclosure.
FIG. 15 is a perspective view showing an embodiment of hollow tube type fillers configured in the coupling module of the block structure, among the fillers shown in FIG. 2.
FIGS. 16A and 16B are views showing embodiments of embodiments of a fixation rib formed on an inside wall of the container of the present disclosure.

### Best Mode

Hereinbelow, a fine bubble generation unit according to exemplary embodiments of the present disclosure will be described in detail with reference to accompanying drawings.

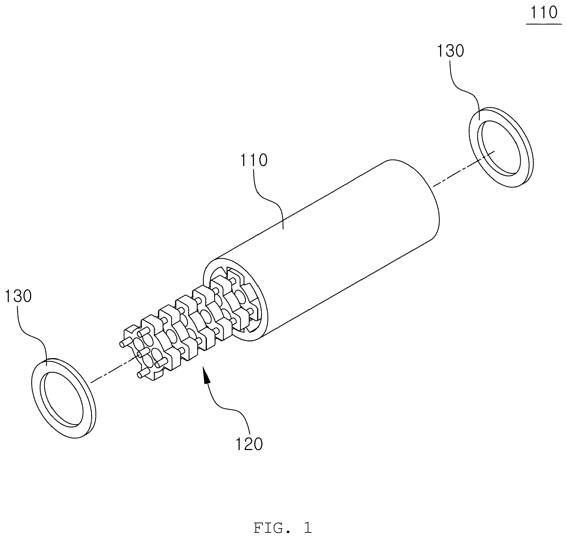

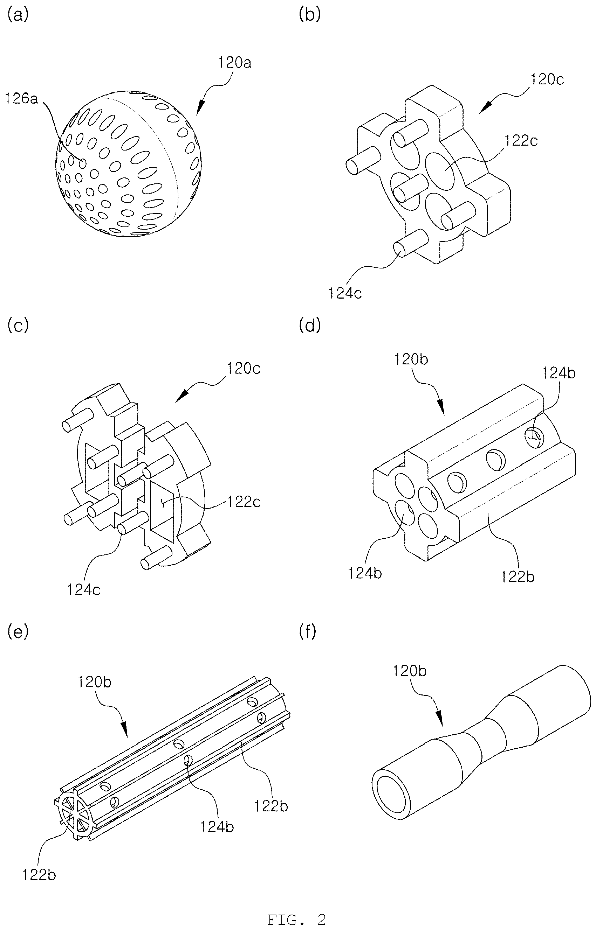

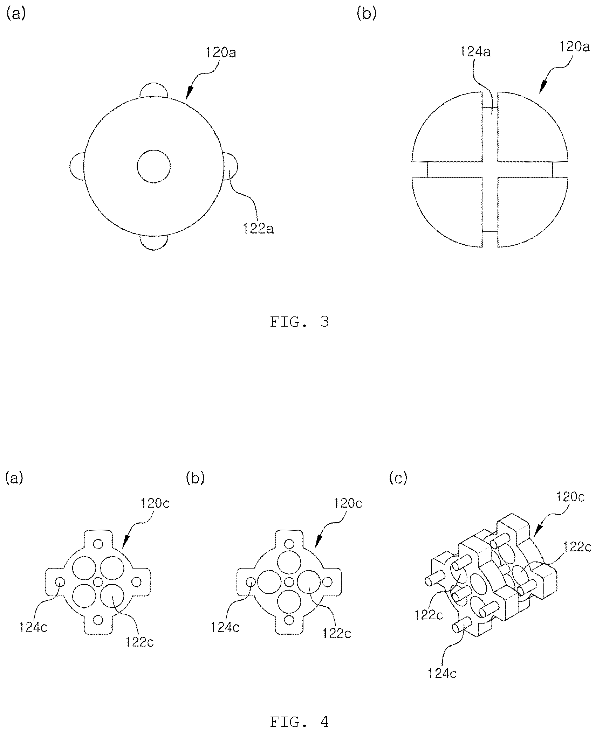

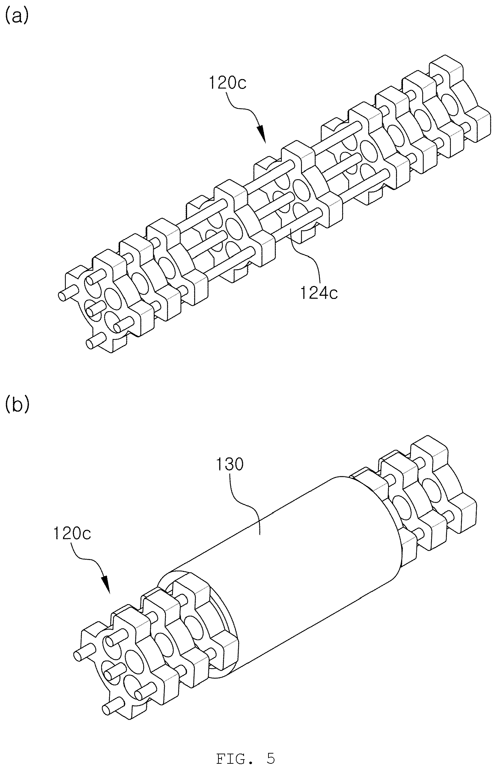

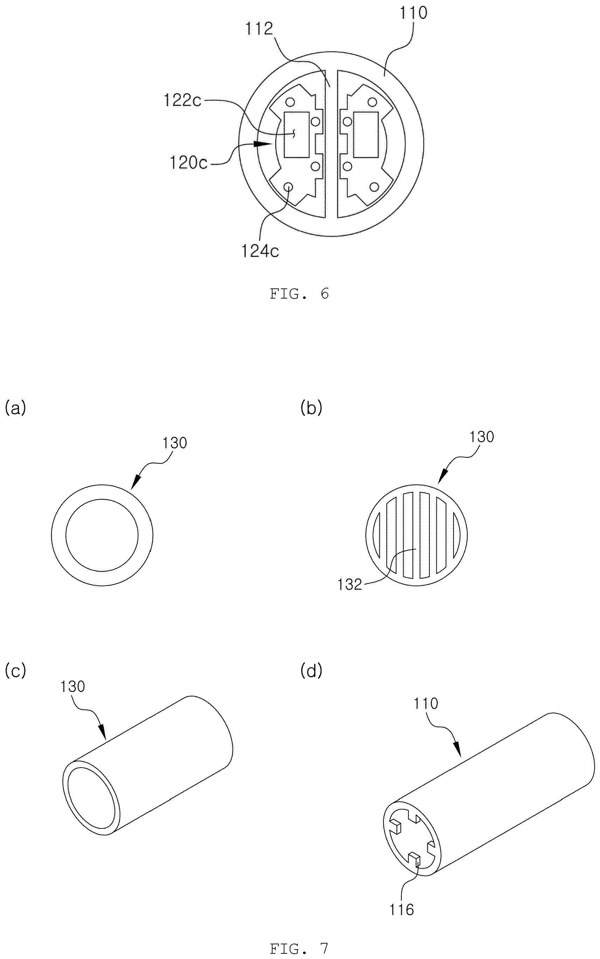

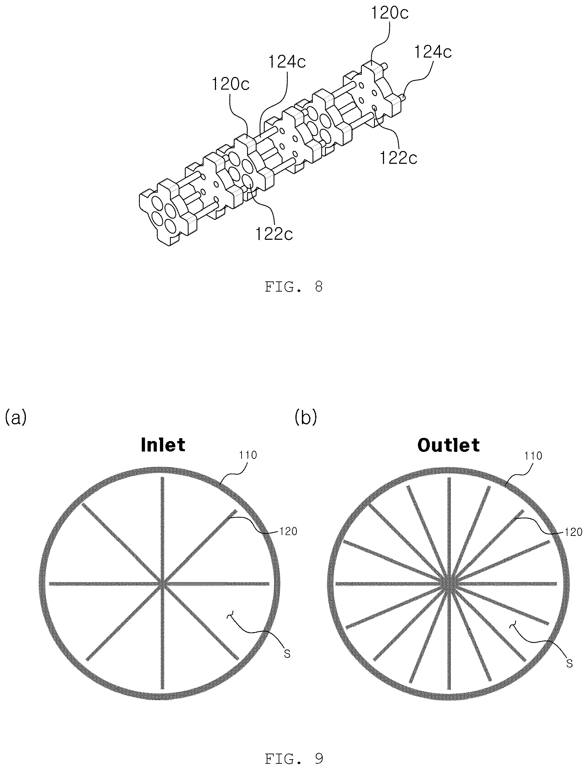

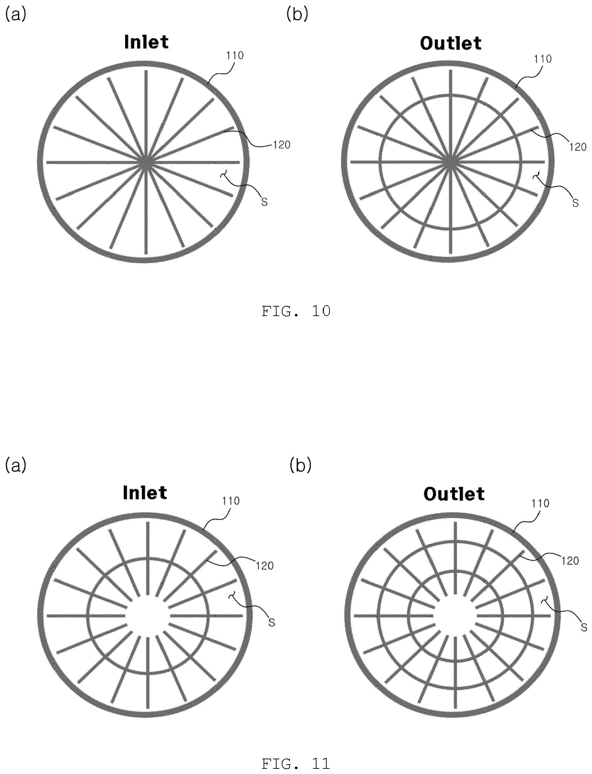

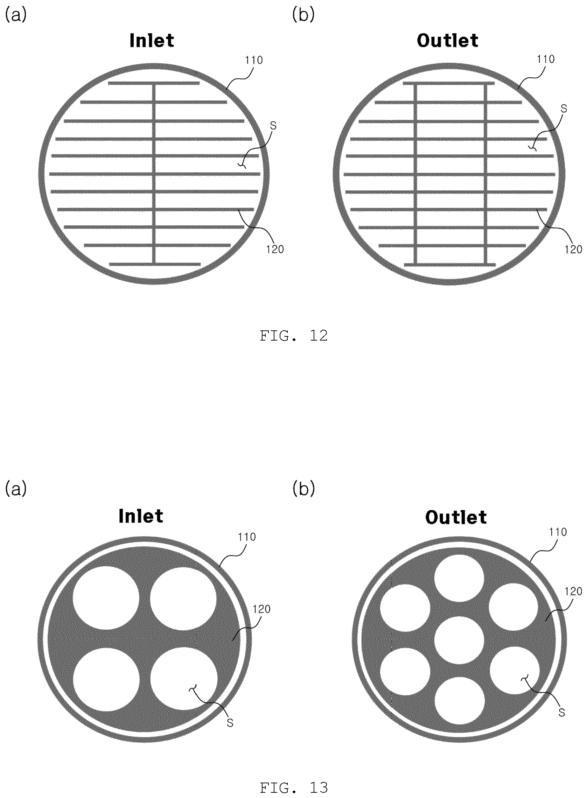

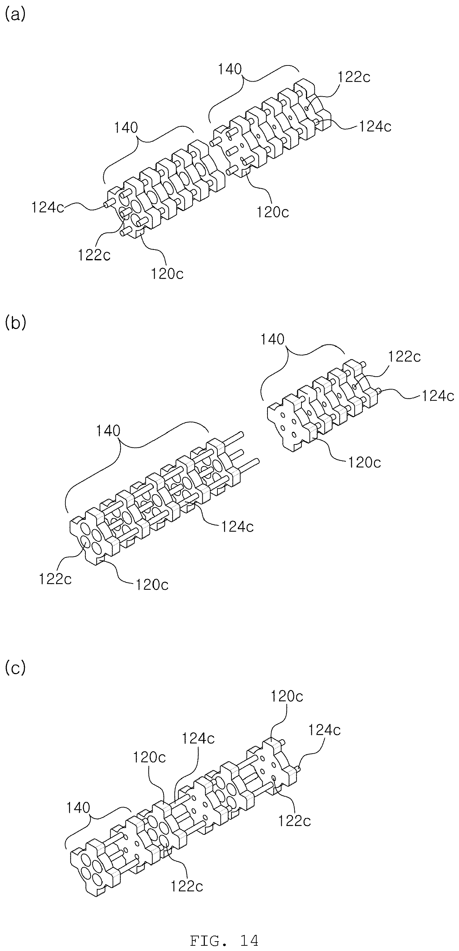

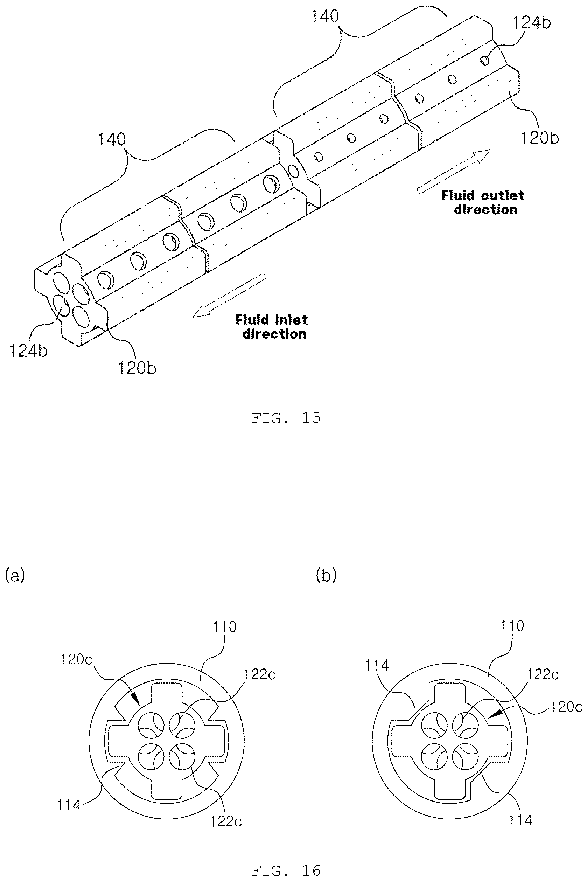

FIG. 1 is an exploded-perspective view showing an embodiment of a fine bubble generation unit according to the present disclosure. FIGS. 2A to 2F are perspective views showing fillers according to various embodiments of the present disclosure shown in FIG. 1. FIGS. 3A and 3B are views showing the spherical filler in detail among the fillers shown in FIG. 2. FIGS. 4A to 4C are views showing the plate type filler in detail among the fillers shown in FIG. 2. FIGS. 5A and 5B are views showing an embodiment of the plate type filler installed inside a container. FIG. 6 is a sectional view showing an inside state of the container in which the filler of the fine bubble generation unit according to the present disclosure is installed. FIGS. 7A to 7C are views showing various embodiments of a stopper of the present disclosure shown in FIG. 1. FIG. 8 is a perspective view showing a plate type filler according to another embodiment among the fillers shown in FIG. 2. FIGS. 9A and 9B to FIGS. 13A and 13B are views showing comparison of sectional shapes of fillers installed inside an inlet and an outlet of the container. FIGS. 14A to 14C are perspective views showing embodiments of the fillers configured in a coupling module of a block structure in the present disclosure. FIG. 15 is a perspective view showing an embodiment of hollow tube type fillers configured in the coupling module of the block structure, among the fillers shown in FIG. 2. FIGS. 16A and 16B are views showing embodiments of embodiments of a fixation rib formed on an inside wall of the container of the present disclosure.

The present disclosure relates to a fine bubble generation unit 100 which is increased the area of friction or collision of a fluid flowing inside a container, or causes a fluid, while passing through the inside portion of the container, to flow at different velocities in neighboring sections, so as to significantly improve, by a simple configuration, the capability of generating fine bubbles having the micrometer or nanometer size. The configuration of the fine bubble generation unit may mainly include a container 110, a filler 120, and a stopper 130 as shown in FIG. 1.

First, the container 110 is formed in a hollow shape so that a fluid used to generate fine bubbles is injected therein and received, and the fluid injected into the container 110 may generate the fine bubbles due to friction or collision between an inside wall of the container and the filler 120 in a process in which the fluid flows inside the container 110.

At this point, the container 110 may adopt a hollow tube type single tube container or a bendable hose type container.

Furthermore, the container 110 may be used with a various shapes and materials such as a shape in which a plurality of single tube or hose type containers is connected to each other in series or parallel, or a shape in which a sectional area thereof is longitudinal constant or is longitudinally changed.

In addition, as shown in FIG. 6, a partition wall 112 may be formed inside the container 110, and the partition wall 112 divides a flow path formed in the container 110 to facilitate occurrence of collision of a fluid flowing inside the container 110 to be efficiently performed and simultaneously prevents movement of the filler 120 to maintain constant stacking of the filler 120, and the partition wall 112 may serve to prevent the container 110 from being damaged due to a rupture under pressure generated when the fluid flows and an external impact, and in other words, may serve to reinforce the container 110.

Furthermore, one or more fixation ribs 114 may be formed by protruding on an inside wall of the container 110, and each of the fixation ribs 144 may serve to restrict the filler 120 from moving or rotating inside the container 110.

In other words, as shown in FIGS. 16A and 16B, the plurality of fixation ribs 114 formed by protruding on the inside wall of the container 110 forms an uneven ( 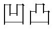 ) structure that corresponds to an outside surface of the filler 120 filled or stacked inside the container 110. In other words, a concave portion ( 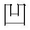 portion) of the filler 120 is located at each fixation rib 114, and a convex portion ( 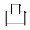 portion) of the filler 120 is located at a portion of the inside wall of the container 110 without each fixation rib 114, so that it is possible to restrict the filler 120 from moving or rotating inside the container 110.

Next, the filler 120 is installed inside the container 110 and serves to generate fine bubbles by collision or friction with the fluid flowing inside the container 110. The filler 120 may be formed in various shapes that may be formed or stacked inside the container 110 such as a shape that is movable or rotatable inside the container 110 under a pressure applied by the fluid passing through the inside space of the container 110.

Furthermore, one or more flow paths may be formed inside the filler 120 to allow the fluid to pass therethrough, and one or more flow paths may be formed also between the outside surface of the filler 120 and the inside wall of the container 110.

As described above, when the flow path in which the fluid passes is formed inside the filler 120, the area of collision or friction between the filler 120 and the fluid is enlarged to increase the amount of generation of fine bubbles, and simultaneously, the pressure applied to the inside wall of the container 110 due to the fluid passing through the inside space of the container 110 can be reduced so that the durability of the container 110 can be improved.

More specifically, as shown in FIGS. 2A to 2F, the filler 120 may include a sphere shape (hereinbelow, which will be referred to as 'a first filler 120a'), a hollow tube shape (hereinbelow, which will be referred to as 'a second filler 120b'), a plate shape (hereinbelow, which will be referred to as 'a third filler 120c'), and the like. An external diameter of each of the first to third fillers (120a, 120b, and 120c) is formed to be smaller than an inside diameter of the container 110 so that the flow path through which the fluid passes may be formed between the filler 120 and the inside wall of the container 110.

First, the spherical first filler 120a may be formed to have one or more through holes 126a through which the fluid can pass through the spherical first filler 120a.

This structure is to form the through holes 126a inside the spherical first filler 120a to enlarge a sectional area of the flow path and simultaneously to improve the rotary force to the spherical first filler 120a, while allowing the fluid to pass through the through holes 126a formed in the spherical first filler 120a inside the container 110, to improve the collision and friction force of the fluid and the occurrence of turbulence of the fluid.

At this point, a diameter of each of the through holes 126a formed in the first filler 120a may be formed differently according to an inner diameter of the container 110, an outer diameter of the first filler 120a, or the like. As described below, in order to minimize the size of generated fine bubbles, each of through holes 126a formed at a front portion of the container 110, i.e., each of through holes 126a of a first filler 120a installed close to an inlet of the fluid, has the largest diameter. A diameter of each of through holes 126a formed at a rear portion of the container 110, i.e., located in a direction toward an outlet of the fluid the first filler 120a, may be smaller.

Furthermore, as shown in FIGS. 3A and 3B, one or more protrusion portions 122a or one or more depressed groove portions 124a may be formed on an external circumferential surface of the first filler 120a, and each of the protrusion portions 122a and the depressed groove portions 124a may enlarge transversely or longitudinally the flow path to allow the fluid inside the container 110 to flow more smoothly and simultaneously to enlarge the area of collision or friction of the first filler 120a. When the fluid flows, the fluid may collide or rub with each of the protrusion portions 122a or the depressed groove portions 124a formed on the external circumferential surface of the first filler 120a so that the collision or the friction of the fluid may be improved by increasing the rotary force of the first filler 120a.

In other words, when the first filler 120a is filled inside the container 110, pores between the first fillers 120a or a space between the inside wall of the container 110 and an external circumferential surface of each first filler 120a are insufficient. Therefore, the area of collision and friction of the fluid inside the container 110 is reduced, so that the capability of generating fine bubbles is degraded or it is difficult to generate fine bubbles having the micrometer or nanometer size. Furthermore, when a flow of the fluid is not smooth, since internal pressure of the container 110 is increased to cause the risk of rupture or breakage of the container 110, the protrusion portions 122a or the depressed groove portions 124a are formed on the external circumferential surface of the first filler 120a, so that the fluid passable space and the area in which occurrence of the collision and friction of the fluid is possible inside the container 110 may be sufficiently secured.

Next, the hollow tube type second filler 120b may be installed in a flow direction of the fluid inside the container 110, i.e., in a longitudinal direction. As shown in FIGS. 2D, 2E, and 2F, the second filler 120b may adopt a tube shape with closed front and rear ends, a tube shape with open front and rear ends, and a shape of which a sectional area is changed in the longitudinal direction such as a venturi tube or an orifice tube.

At this point, a plurality of ribs 122b may be longitudinally formed on an inside wall or an outside wall of the second filler 120b. First, ribs 122b formed on the inside wall partition a flow path formed inside the second filler 120b or serve to induce collision between fluids passing through the inside space of the second filler 120b, thereby improving the capability of generating fine bubbles.

Furthermore, although not shown in the drawings, a plurality of protrusion portions or a plurality of depressed groove portions is formed on the inside wall of the second filler 120b to generate a turbulence in a process in which the fluid passing through the inside space of the second filler 120b.

Furthermore, ribs 122b formed on the outside wall of the second filler 120b induce collision between fluids passing through the outside space of the second filler 120b and simultaneously secure a space between the second filler 120b and the inside wall of the container 110 so that the ribs 122b may allow the fluids to flow smoothly inside the container 110.

In addition, one or more through holes 124b may be formed on a lateral wall of the second filler 120b, and the through holes 124b serve to further activate collision between fluids by changing a direction of a flow of a fluid to increase occurrence of turbulence.

In other words, a fluid injected into the second filler 120b generates a flow of flowing longitudinally to escape through the through holes 124b, and a fluid flowing outside the second filler 120b generates a flow of entering into the second filler 120b through the through holes 124b, so that the capability of generating fine bubbles can be improved due to collision between the two flows.

At this point, in the case of the second filler 120b having the tube shape with the closed front and rear ends, the through holes 124b are also formed on the closed front and rear end to form the flow path.

Next, the plate type third filler 120c may be arranged across a flow direction of the fluid or be arranged perpendicular to a flow direction of the fluid to be stacked inside the container 110, and one or more through holes 124c may be formed in forward and rearward directions of the third filler 120c to form the flow path.

At this point, as shown in FIGS. 2B and 2C, the third filler 120c may be formed in a shape corresponding to the flow path formed inside the container 110, and an outside surface thereof is formed in an uneven shape, in which a concave portion ( 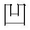 portion) and a convex portion ( 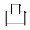 portion) are repeated, so as to form a plurality of flow paths between the inside wall of the container 110 and the outside surface of the third filler 120c for the fluid to pass therethrough. When the inside space of the container 110 is partitioned with the partition wall 112, the third filler 120c is also partitioned to be inserted and installed at each flow path inside the container 110, the flow path being partitioned by the partition wall 112.

Furthermore, on one side edge that is a front surface or a rear surface of the third filler 120c, a gap maintaining part 124c may be formed by protruding longitudinally, and the gap maintaining part 124c may serve to maintain gaps between a plurality of third fillers 120c that are installed to be stacked inside the container 110, i.e., a gap between neighboring third fillers 120c above a predetermined level.

In other words, when the gap maintaining part 124c maintains the gap between the third fillers 120c, a flow path crossing a flow direction of the fluid flowing forward inside the container 110 is additionally formed, so that the area of friction or collision of the fluid is enlarged. Simultaneously, the fluid flowing forward and a fluid closing the fluid collide with each other so that the amount of generating turbulence is increased so as to improve the capability of generating fine bubbles.

At this point, the length of the gap maintaining part 124c may vary according to a location inside the container 110 where the third filler 120c is installed or a property of the container 110, and the property relates to the capability of generating fine bubbles and the size of each fine bubble, and whether or not the container 110 is bent.

In addition, with the gap maintaining part 124c formed on an edge of one side portion that corresponds to the front surface or the rear surface of the third filler 120c, the length of a gap maintaining part 124c that is formed at a third filler 120c installed adjacent to the inlet of the fluid, i.e., to the front portion of the container 110 is longest, and the length of a gap maintaining part 124c formed in a third filler 120c is shortened in a direction toward the rear portion of the container 110, i.e., toward the outlet of the fluid, so that a velocity of the fluid inside the container 110 is gradually increased so as to improve the capability of generating fine bubbles and simultaneously to minimize the size of finally generated fine bubbles.

Furthermore, with respect to the same container 110, a section that needs to be bent is formed such that the length of the gap maintaining part 124c formed in the third filler 120c is longer than the length of the gap maintaining part 124c formed in a third filler 120c filled or stacked in another section of the container 110, so that the section of the container 110 that needs to be bent may have a large porous ratio or a low density so as to facilitate bending of the container 110.

Therefore, as shown in FIG. 5A, with respect to the third filler 120c installed inside the container 110 where free bending is required and the third filler 120c installed at an inside portion of the container 110 where bending is performed, it is preferable that the length of the gap maintaining part 124c is formed long to minimize bending limitation in the container 110 caused by the third filler 120c.

The technical property as described above may be applied to not only the third filler 120c, but also the first and second fillers 120a and 120b, and according to a shape or a bending property of the container 110, the porous ratio or the density of the container 110 is configured differently such that a gap between the fillers 120 stacked or filled inside the container 110 varies, or installation of the filler 120 is limited, so that the bending limitation of the container 110 due to the filler 120 can be minimized.

Meanwhile, as shown in FIGS. 4A and 4B, the through holes 124c formed in the third filler 120c may be formed differently in location, and this configuration is to arrange flow paths respectively formed in neighboring third fillers 120c to be misaligned.

In other words, as shown in FIG. 4C, when third filler 120c are installed to be stacked in order to arrange flow paths respectively formed in the neighboring third fillers 120c to be misaligned, compared to when the third fillers 120c are arranged so that the flow paths are arranged constant, collision between the fluid and the third fillers 120c and collision between fluids passing through the flow paths actively occur and the capability of generating fine bubbles can be improved.

At this point, as a method of misaligning the flow paths of the third fillers 120c from each other, the method of locating the through holes 122c formed in the third filler 120c differently is described as an example, but the through holes at the same locations 122c, i.e., an installation angle of the third filler 120c having the flow paths may be adjusted so as to arrange the flow paths of the neighboring third fillers 120c to be misaligned with each other, and the number of the through holes 124b formed in the second filler 120b or of the through holes 124c formed in the third filler 120c may vary according to a purpose of usage of fine bubbles or the generation amount of fine bubbles to be generated.

Furthermore, a diameter of each of the flow paths or the through hole 124c formed in the third filler 120c, i.e., a section area may be differently formed, and this configuration is to reduce the size of generated fine bubbles.

In other words, as shown in FIG. 8, the size of the flow path or the through hole 124c formed in the third filler 120c installed adjacent to the front portion of the container 110, i.e., the inlet into which the fluid is injected, is formed largest, and the size of the flow path or the through hole 124c formed in the third filler 120c installed adjacent to the rear portion of the container 110, i.e., the outlet through which the fluid is discharged is formed smallest, so that the size of fine bubbles generated in the process in which the fluid passes through the third filler 120c is gradually reduced so as to minimize the size of the finally generated fine bubbles.

Although the above-described technical properties are also described with the plate type third filler 120c as an example, but as shown in FIGS. 14 and 15, the technical properties may be commonly applied to the fillers 120 having other shapes such as the second filler 120b.

In other words, the flow paths of the fillers 120 installed inside the container 110 in the filling or stacking shape are formed small as each filler is located adjacent to the outlet of the container 110, so that the size of finally generated fine bubbles can be minimized.

Furthermore, as shown in FIG. 8, as the configuration in which a diameter of the flow path formed each of the neighboring fillers 120, i.e., a sectional area is different from a diameter of another flow path, or the flow path is located differently from each other is repeatedly implemented, velocity change continuously and repeatedly occurs in the process in which the fluid passes through the inside space of the container 110, and simultaneously, collision or friction between the fluid and another fluid, the fluid and the filler 120, the fluid and the inside wall of the container 110 is more active to repeatedly perform generation, dissipation, and generation of fine bubbles to improve the sterilization power and it may be configured to maximize generation of fine bubbles at the final outlet of the container 110, through which the fluid is injected, and to minimize the size of generating fine bubbles.

Meanwhile, as a method for minimizing the size of a fine bubble generated in the outlet of the container 110, a cross-sectional area (hereinbelow, which will be referred to as 'sectional area') of the filler 120 installed inside the container 110 may vary, and a sectional area of the filler 120 installed at the outlet of the container 110 is formed larger than a sectional area of the filler 120 installed at the inlet of the container 110 so that the size of generated fine bubble may be gradually reduced.

More specifically, as shown in FIGS. 9A and 9B to FIGS. 12A and 12B, the filler 120 installed inside the container 110 may have various shapes, and when a sectional area of the filler 120 installed at the outlet of the container 110 is formed larger than a sectional area of the filler 120 installed at the inlet of the container 110, relatively a sectional area S in which the fluid may pass through the inside space of the container 110 is relatively large at the inlet of the container 110, and is small at the outlet of the container 110, so that in the process in which the fluid passes through the inside space of the container 110 a flow velocity gradually increases, thereby increasing the collision energy between the fluid and the filler 120.

Furthermore, when the sectional area of the filler 120 is enlarged, the area of collision and the area of friction between the fluid passing through the inside space of the container 110 and the filler 120 are also enlarged by the amount of enlarging the sectional area of the filler 120.

Accordingly, as described above, when it the sectional area of the filler 120 installed inside the container 110 is configured to be minimized at the inlet of the container 110 and to be maximized at the outlet of the container 110, as the size and the amount of generating fine bubbles generated in the process in which the fluid passes through the inside space of the container 110 may be configured to be gradually increased and reduced as a location of the filler goes to the outlet.

At this point, variation of the sectional area of the filler 120 inside the container 110 described above may be configured to be sequentially or gradually performed. Even when two or more fillers 120 are provided at a section of the inlet or the outlet of the container 110, the total sectional area of the fillers 120 at the outlet of the container may be formed larger than the total sectional area of the fillers at the inlet of the container 110.

Furthermore, the filler 120 may be formed of one or more materials such as rubber, silicone, and other flexible plastics or metals, and when the filler 120 is formed of a flexible material, occurrence of collision and friction between the fluid and the filler 120 may be increased due to vibrations or deformation of the filler 120 under the pressure of the fluid flowing inside the container 110.

Specifically, as shown in FIGS. 9 to 12, when the filler 120 of a flexible material is formed in a thin sheet shape or a shape in which two or more thin sheets are coupled to each other, vibrations effect of the filler 120 under the pressure of the fluid is strong to increase occurrence of collision and friction between the fluid and the filler 120. Accordingly, the amount and number of generating fine bubbles and inside the container 110 can be increased and also the size of finally generate fine bubbles can be reduced.

Furthermore, FIGS. 13A and 13B are views showing the sizes of the flow paths formed inside the fillers 120 installed at the inlet and the outlet of the container 110 in comparison with each other. As described above, the flow path formed inside the filler 120 installed at the inlet of the container 110, into which the fluid is injected, has the largest size, and the flow path formed inside the filler 120 installed at the outlet of the container 110, through which the fluid is discharged, has the smallest size, so that the flow paths formed inside the fillers 120 located at a middle portion of the container 110 are gradually or sequentially reduced in size. In this case, the size of each fine bubble generated in the process in which the fluid passing through the filler 120 is gradually reduced so that the size of a finally generated fine bubbles can be minimized.

Meanwhile, the filler 120 including the first to third fillers 120a, 120b, and 120c has a standardized shape, and when the standardized filler 120 is filled or stacked inside the container 110, there are advantages that the amount and the size of generated fine bubbles can be efficiently managed and thus the mass production of the fine bubble generation unit 100 that generates fine bubbles with constant quality is possible.

Furthermore, as shown in FIGS. 14 and 15, the filler 120 including the first to third fillers 120a, 120b, and 120c may be formed by filling or stacking a coupling module 140 having a block structure formed of the plurality of fillers 120a, 120b, and 120c connected to each other in series or parallel, or by filling or stacking an integrated coupling module 140 manufactured of the plurality of fillers 120a, 120b, and 120c. As described above, when the fillers 120a, 120b, and 120c are formed or manufactured in the coupling module 140 of the block structure, the time and the costs required for manufacturing, installation, and maintenance of the fillers 120a, 120b, and 120c can be reduced and the quality management such as the generating amount and the size of fine bubbles generated by the fillers 120a, 120b, and 120c can be further efficient.

At this point, when the coupling module 140 of the block structure consists of second fillers 120b, a diameter or the number of the through holes 124b formed on a lateral surface of each second filler 120b is different from each other, and the second filler 120b including the through holes 124b having a large diameter may be installed toward the inlet of the container 110, i.e., in a direction in which the fluid is injected.

Furthermore, when the coupling module 140 of the block structure consists of the third fillers 120c, a diameter, the number, or the arrangement of the through holes 124c and the length of the gap maintaining part 124c may be formed different for each coupling module 140. A plurality of coupling modules 140 may be formed inside the container 110 to be spaced apart from each other, and even in this case, the coupling module 140 consisting of the third fillers 120c with the through holes 124c having large diameters is installed toward the inlet of the container 110, into which the fluid is injected, and the coupling module 140 consisting of the third fillers 120c with the through holes 124c with relative small diameters may be installed toward the outlet of the container 110 into which the fluid is discharged.

Furthermore, when the plurality of coupling modules 140 is formed inside the container 110, a type of the fillers 120 constituting each coupling module 140 may vary from each other, and a sectional area of the flow path formed inside each coupling module 140, or a gap between the coupling modules 140 may vary according to a property of the container 110 such as the bending, or the generating amount or the size of fine bubbles to be generated.

Furthermore, the filler 120 and the coupling module 140 may be configured to be standardized by injecting or pressing out plastic resin so as to achieve mass production of the fine bubble generation unit 100 with constant quality.

Next, the stopper 130 serves to prevent the filler 120 provided inside the container 110 from moving and removing, and the stopper 130 having a ring shape or a hollow tube shape may be used according to the shape of the filler 120.

More specifically, the stopper 130 is formed to have an outer diameter same as an inner diameter of the container 110 and a pair of stoppers 130 is installed to be spaced apart from each other inside the container 110, and the filler 120 is installed between the pair of stoppers 130 spaced apart from each other so as to restrict the stoppers 130 from moving inside or being removed from the container 110 under the pressure of the fluid flowing inside the container 110.

At this point, when the spherical first filler 120a or the hollow tube type second filler 120b is used as the filler 120, as shown in FIG. 7B, as the stopper 130, the stopper 130 having a closed ring shape, i.e., the stopper 130 having a blocking member 132 having a strap shape or grid shape at an open center portion of the stopper is used, so that the blocking member 132 may prevent the first or second filler 120a, 120b from moving.

Furthermore, when the hollow tube type second filler 120b or the plate type third filler 120c is used as the filler 120, as shown in FIG. 7A, the stopper 130 having an open ring shape may be used.

In addition, as shown in FIG. 7C, as the stopper 130, the hollow tube type stopper 130 may be used. The hollow tube type stopper 130 may serve to support the inside wall of the container 110 to improve the durability of the container 110.

Furthermore, when the container 110 is formed of a bendable material, as shown in FIG. 5B, the hollow tube type stopper 130 may be installed inside a bending section of the container 110 located between the fillers 120, and at this point, the hollow tube type stopper 130 is formed of a bendable material so as to prevent the filler 120 from restricting bending of the container 110.

Furthermore, although not shown in the drawings, a plurality of protrusion portions or a plurality of depressed groove portions is formed on an inside surface of the hollow tube type stopper 130, so that turbulence is generated in a process in which the fluid passes through the inside space of the stopper 130 so as to improve the capability of generating fine bubbles.

Meanwhile, the stopper 130 may be coupled to each of ends of the opposite sides of the container 110, not to the inside portion thereof. In this case, the stopper 130 is formed to have the outer diameter same as the outer diameter of the container 110 so as to be securely fastened to each side end of the container 110 by a fastening means such as a bolt, etc.

At this point, as shown in FIG. 7D, the stopper 130 may be formed integrally with each side end of the container 110. a plurality of blocking steps 116 is formed by protruding inward on each side end of the container 110 so as to prevent the filler 120 from being removed out of the container 110.

Furthermore, although not shown in the drawings, when relative connection parts are attached to ends at the opposite sides of the stopper 130 or ends at the opposite sides of the container 110 a connector or a shower head, the fine bubble device may be configured by adding a stopper function to the relative connection parts itself for preventing moving or removing of the filler 120, and in this case, the relative connection parts such as a connector or a shower head may be included within a range of the stopper 130 of the present disclosure.

Therefore, as described above, in the fine bubble generation unit 100 according to the present disclosure, by the relatively simple configuration, the generation ratio of fine bubbles for each unit volume is improved, and the size of each generated fine bubble is minimized, so that the fine bubble generation unit may be efficiently applied to all fields, such as agriculture, environment, medical, beauty fields, etc., using fine bubbles, and since the downsized unit 100 having a small volume can generate fine bubbles having the micrometer or nanometer size, the costs for installation and maintenance can be reduced and usage without restriction of time, place, and use, and since the standardized fillers 120 are filled or stacked constant, the fine bubble generation unit 100 with constant quality can be manufactured, and since separation and cleaning of the container 110 and the filler 120 are easily performed, by the simple configuration, maintenance thereof is easily performed and the durability thereof is excellent.

Although the above-described embodiments have been described about the best example of the present disclosure, but the present disclosure is not limited to the embodiments. When the plurality of coupling modules 140 is installed inside the container 110, those skilled in the art will appreciate that it is possible to perform various changes such that the filler 120 constituting each coupling module 140 is used while selecting one of the first to third fillers 120a, 120b, and 120c, according to the use objective or the amount of generating fine bubbles to be generated, the size of each fine bubble, etc., and the gap maintaining part 124c formed on the third filler 120c is formed by protruding on each of front and rear surfaces of the third filler 120c, without departing from the technical scope of the present disclosure.

### [Industrial Applicability]

The present disclosure relates to a fine bubble generation unit. More particularly, the present disclosure relates to a fine bubble generation unit, which is configured to enlarge the area of friction or collision of a fluid flowing inside a container or cause the fluid, while passing through the inside space of the container, to flow at different velocities in neighboring sections, so as to significantly improve, by a simple configuration, the generation capability and the sterilization power of fine bubbles having the micrometer or nanometer size.

## Claims

1. A fine bubble generation unit comprising:
a container into which a fluid is injected and discharged,
a plurality of fillers filled or stacked inside the container, comprising a flow path through which the fluid flows, the flow path being formed therein or between the plurality of fillers and an inside wall of the container, and
a stopper provided inside the container or ends at opposite sides of the container to prevent the plurality of fillers from moving and being removed,
wherein fine bubbles are configured to be generated in a process in which the fluid passes through an inside portion of the container, and
a sectional area of a filler installed at an outlet of the container, through which the fluid is discharged, is formed larger than a sectional area of a filler installed at an inlet of the container, thereby enlarging a velocity of the fluid and increasing an area of friction and collision between the fluid and the fillers.

2. A fine bubble generation unit comprising:
a container into which a fluid is injected and discharged,
a plurality of fillers filled or stacked inside the container and comprising a flow path, through which a fluid flows, formed inside, and
a stopper provided inside the container or ends at opposite sides of the container to prevent the plurality of fillers from moving and being removed,
wherein fine bubbles are configured to be generated in a process in which the fluid passes through an inside portion of the container, and
a sectional area of a flow path formed in a filler installed at an inlet of the container, through which the fluid is injected, is formed larger than a flow path formed in a filler installed at an outlet of the container, through which the fluid is discharged, to reduce a size of a fine bubble generated in a process in which the fluid passes through the fillers, thereby minimizing a size of a finally generated fine bubble.

3. The fine bubble generation unit of claim 1 or 2, wherein the plurality of fillers is formed in a coupling module of a block structure in which the plurality of fillers is connected to each other in series or parallel, and one or more coupling modules are filled or stacked inside the container.

4. The fine bubble generation unit of claim 1 or 2, wherein each of the plurality of fillers has a sphere shape in which one or more protrusion portions or one or more depressed groove portions are formed on a circumferential surface thereof.

5. The fine bubble generation unit of claim 1 or 2, wherein each of the plurality of fillers has a hollow tube shape having a rib longitudinally formed on an inside wall or an outside wall thereof.

6. The fine bubble generation unit of claim 1 or 2, wherein a through hole is formed on a lateral wall of each of the fillers for forming the flow path.

7. The fine bubble generation unit of claim 1 or 2, wherein each of the plurality of fillers is formed of a flexible material, and is formed in a sheet shape or a shape in which two or more sheets are coupled to each other so that the plurality of fillers vibrates by pressure of the fluid flowing inside the container.

8. The fine bubble generation unit of claim 1 or 2, wherein each of the plurality of fillers is installed in a direction crossing a flowing direction of the fluid, comprises a through hole to form the flow path, and has a plate shape on which a gap maintaining part is formed to protrude, on one side portion or opposite side portions to maintain a gap from a neighboring filler.

9. The fine bubble generation unit of claim 1 or 2, wherein each of the plurality of fillers is installed such that an arrangement of the flow path thereof or a sectional area of the flow path thereof is different from a neighboring filler.

10. The fine bubble generation unit of claim 3, wherein the coupling module is installed such that an arrangement of the flow path thereof or a sectional area of the flow path thereof is different from a neighboring coupling module.

11. The fine bubble generation unit of claim 1 or 2, wherein an uneven ( 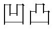 ) structure is formed between an inside wall of the container and an outside wall of each of the fillers to restrict movement or rotation of each of the fillers inside the container.
